# EUROPÄISCHE PATENTANMELDUNG

(11) **EP 4 692 885 A1**
(43) Veröffentlichungstag der Anmeldung: **11.02.2026**
(21) Anmeldenummer: 25190066.8
(22) Anmeldetag: 17.07.2025
(51) Int. Cl.: G02B 7/14, G02B 21/24

(54) **ABBILDENDES SYSTEM MIT EINER WECHSELVORRICHTUNG UND MIKROSKOP**

(30) Priorität: 08.08.2024 DE 102024122618
(71) Anmelder: Leica Microsystems CMS GmbH, 35578 Wetzlar (DE)
(72) Erfinder: Sieper, Jochen, 35578 Wetzlar (DE); Lemp, Moritz, 35578 Wetzlar (DE)
(74) Vertreter: Schaumburg und Partner Patentanwälte mbB

(57) **Zusammenfassung**

Ein abbildendes System (100) umfasst eine Wechselvorrichtung (102) mit einer Wechselhalterung (108), die dazu ausgebildet ist, mindestens ein optisches Element (106) aufzunehmen und dadurch in einem optischen Strahlengang (104) des abbildenden Systems (100) anzuordnen, und ein Zugangselement (112), das einen geöffneten und einen geschlossenen Zustand aufweist und dazu ausgebildet ist, in dem geöffneten Zustand einen Zugriff auf das in der Wechselhalterung (108) aufgenommene optische Element (106) zu ermöglichen. Die Wechselvorrichtung (102) umfasst ferner ein bistabiles Element (114), das einen ersten stabilen Zustand und einen zweiten stabilen Zustand hat und dazu ausgebildet ist, beim Öffnen des Zugangselements (112) von dem ersten stabilen Zustand in den zweiten stabilen Zustand überzugehen und beim Schließen des Zugangselements (112) in dem zweiten stabilen Zustand zu verbleiben. Das abbildende System (100) umfasst ferner eine Steuereinheit (120), die dazu ausgebildet ist, zu ermitteln, ob das bistabile Element (114) in dem ersten stabilen Zustand oder dem zweiten stabilen Zustand ist, und zu ermitteln, dass das Zugangselement (112) geöffnet wurde und damit ein Zugriff auf das in der Wechselhalterung (108) aufgenommene optische Element (106) ermöglicht wurde, wenn das bistabile Element (114) in dem zweiten stabilen Zustand ist.

## Beschreibung

### Technisches Gebiet

Die Erfindung betrifft ein abbildendes System mit einer Wechselvorrichtung. Die Erfindung betrifft ferner ein Mikroskop.

### Hintergrund der Erfindung

Viele Mikroskope umfassen auswechselbare optische Elemente, beispielsweise Objektive und Okulare, aber auch Filter oder Strahlteiler können auswechselbar sein. Oftmals ist nach einem Wechsel des optischen Elements eine Kalibrierung des Mikroskops erforderlich, gerade wenn die auswechselbaren optischen Elemente Teil eines optischen Strahlengangs des Mikroskops sind. Ein Mikroskop zu kalibrieren kann jedoch ein sehr zeitaufwendiger Vorgang sein, der die Zeit, in der das Mikroskop für Experimente genutzt werden kann, erheblich reduziert. Es ist daher wünschenswert, unnötige Kalibriervorgänge möglichst zu vermeiden.

### Zusammenfassung

Es ist daher eine Aufgabe der Erfindung, ein abbildendes System mit einer Wechselvorrichtung und ein Mikroskop anzugeben, die es ermöglichen, die Anzahl von Kalibriervorgängen zu reduzieren.

Diese Aufgabe wird durch ein abbildendes System mit den Merkmalen des Anspruchs 1 und durch ein Mikroskop mit den Merkmalen des weiteren unabhängigen Anspruchs gelöst. Vorteilhafte Weiterbildungen sind in den abhängigen Ansprüchen angegeben.

Das vorgeschlagene abbildende System umfasst eine Wechselvorrichtung. Die Wechselvorrichtung umfasst eine Wechselhalterung, die dazu ausgebildet ist, mindestens ein optisches Element aufzunehmen und dadurch in einem optischen Strahlengang des abbildenden Systems anzuordnen, und ein Zugangselement, das einen geöffneten und einen geschlossenen Zustand aufweist und dazu ausgebildet ist, in dem geöffneten Zustand einen Zugriff auf das in der Wechselhalterung aufgenommene optische Element zu ermöglichen. Die Wechselvorrichtung umfasst ferner ein bistabiles Element, das einen ersten stabilen Zustand und einen zweiten stabilen Zustand hat und dazu ausgebildet ist, beim Öffnen des Zugangselements von dem ersten stabilen Zustand in den zweiten stabilen Zustand überzugehen und beim Schließen des Zugangselements in dem zweiten stabilen Zustand zu verbleiben. Das abbildende System umfasst ferner eine Steuereinheit, die dazu ausgebildet ist, zu ermitteln, ob das bistabile Element in dem ersten stabilen Zustand oder dem zweiten stabilen Zustand ist, und zu ermitteln, dass das Zugangselement geöffnet wurde und damit ein Zugriff auf das in der Wechselhalterung aufgenommene optische Element ermöglicht wurde, wenn das bistabile Element in dem zweiten stabilen Zustand ist.

Mit Hilfe der Wechselhalterung kann das optische Element in dem optischen Strahlengang des abbildenden Systems angeordnet werden. Beispielsweise kann ein Filter oder ein Filterwürfel in einem Strahlgang vor einem Detektor des abbildenden Systems angeordnet werden, um mit Hilfe des Detektors nur einen bestimmten Wellenlängenbereich zu detektieren.

Das Zugangselement ist beispielsweise ein Teil eines Gehäuses des abbildenden Systems, das zumindest die Wechselhalterung umfasst. In dem geschlossenen Zustand verhindert das Zugangselement einen Zugriff auf die Wechselhalterung und das darin angeordnete optische Element, so dass das optische Element beispielsweise im Betrieb des abbildenden Systems nicht aus der Wechselhalterung entfernt werden kann. Insbesondere verhindert das Zugangselement in dem geschlossenen Zustand, dass das optische Element verstellt wird und so eine Kalibrierung des abbildenden Systems erforderlich wird. In dem geöffneten Zustand hingegen ermöglicht das Zugangselement einen Zugang zu dem optischen Element, beispielsweise um das optische Element gegen ein anderes zu tauschen. Wenn das Zugangselement geöffnet wurde, d.h. sich zumindest einmal in dem geöffneten Zustand befunden hat, besteht die Möglichkeit, dass das optische Element entfernt, ausgetauscht oder verstellt wurde. Dies bedeutet aber, wenn das Zugangselement nach erfolgter Kalibrierung des abbildenden Systems geöffnet wurde, ist mitunter eine erneute Kalibrierung erforderlich.

Wenn das abbildende System in Betrieb ist, könnte beispielsweise durch Auslesen eines Sensors im Bereich des Zugangselements ermittelt werden, wenn das Zugangselement geöffnet wird. In einem ausgeschalteten Zustand des abbildenden Systems ist dies mitunter jedoch nicht möglich.

Die Wechselvorrichtung des vorgeschlagenen abbildenden Systems umfasst daher das bistabile Element. Beim Öffnen des Zugangselements geht das bistabile Element von dem ersten stabilen Zustand in den zweiten stabilen Zustand über und verbleibt dort. Diese Erkennung einer erfolgten Öffnung des Zugangselements funktioniert im ausgeschalteten Zustand des abbilden Systems und stellt somit ein stromfreies "Zustandsgedächtnis" dar.

Das bistabile Element, das sich nach dem Öffnen im zweiten stabilen Zustand befindet, muss dann wieder in den ersten stabilen Zustand zurückversetzt werden. Dies kann beispielsweise manuell durch einen Benutzer erfolgen.

Wurde das Zugangselement in dem ausgeschalteten Zustand des abbildenden Systems geöffnet, kann dies durch die Steuereinheit anhand des Zustandes des bistabilen Elements ermittelt werden. Damit kann durch die Wechselvorrichtung sichergestellt werden, dass zuverlässig ermittelt wird, ob das Zugangselement geöffnet wurde und damit ein Zugriff auf das in der Wechselhalterung angeordnete optische Element möglich war. Da eine erneute Kalibrierung häufig nur dann erforderlich ist, wenn die Möglichkeit besteht, dass das optische Element entfernt, ausgetauscht oder verstellt wurde, kann somit die Anzahl von Kalibriervorgängen reduziert und die Betriebszeit des abbildenden Systems erhöht werden.

Bei einer Ausführungsform ist die Steuereinheit dazu ausgebildet, beim Einschalten des abbildenden Systems zu ermitteln, ob das bistabile Element in dem ersten stabilen Zustand oder dem zweiten stabilen Zustand ist. Die Steuereinheit kann ferner dazu ausgebildet sein, zu ermitteln, dass in einem ausgeschalteten Zustand des abbildenden Systems das Zugangselement geöffnet wurde und damit ein Zugriff auf das in der Wechselhalterung aufgenommene optische Element ermöglicht wurde, wenn das bistabile Element in dem zweiten stabilen Zustand ist. Wurde das Zugangselement in dem ausgeschalteten Zustand des abbildenden Systems geöffnet, wurde das bistabile Element von dem ersten stabilen Zustand in den zweiten stabilen Zustand gebracht. Befindet sich das bistabile Element beim Einschalten in dem zweiten stabilen Zustand, wurde das Zugangselement im ausgeschalteten Zustand des abbildenden Systems geöffnet und es war ein Zugriff auf das optische Element möglich. Auf Grundlage dieser Information kann die Steuereinheit beispielsweise eine erneute Kalibrierung initiieren oder den Benutzer informieren, dass eine erneute Kalibrierung des abbildenden Systems erforderlich ist, bevor beispielsweise ein Experiment begonnen wird. Damit wird sichergestellt, dass in die in dem Experiment gewonnenen Messergebnisse präzise sind, indem das Risiko von Fehlern minimiert wird, die durch eine fehlerhafte Kalibrierung verursacht werden könnten.

Bei einer weiteren Ausführungsform umfasst die Wechselvorrichtung einen ersten Sensor, der dazu ausgebildet ist, zu ermitteln, ob sich das bistabile Element in dem ersten stabilen Zustand oder in dem zweiten stabilen Zustand befindet. Die Steuereinheit kann dazu ausgebildet sein, unter Verwendung von ersten Sensordaten, die von dem ersten Sensor bereitgestellt werden, zu ermitteln, ob sich das bistabile Element in dem ersten stabilen Zustand oder in dem zweiten stabilen Zustand befindet. So kann die Steuereinheit unter Verwendung des ersten Sensors zuverlässig ermitteln, ob das Zugangselement geöffnet wurde.

Bei einer weiteren Ausführungsform umfasst die Wechselvorrichtung einen zweiten Sensor, der dazu ausgebildet ist, zu ermitteln, ob sich das Zugangselement in dem geöffneten Zustand oder in dem geschlossenen Zustand befindet. Die Steuereinheit kann dazu ausgebildet sein, unter Verwendung von zweiten Sensordaten, die von dem zweiten Sensor bereitgestellt werden, zu ermitteln, ob sich das Zugangselement in dem geöffneten Zustand oder in dem geschlossenen Zustand befindet. So kann die Steuereinheit unter Verwendung des zweiten Sensors zuverlässig ermitteln, ob momentan ein Zugriff auf das optische Element möglich ist. Wenn zum Beispiel der Nutzer im Betrieb des abbildenden Systems, d.h. in einem eingeschalteten Zustand des abbildenden Systems, das Zugangselement öffnet, kann die Steuereinheit dies unter Verwendung des zweiten Sensors feststellen und beispielsweise veranlassen, dass eine Warnung ausgegeben wird. So wird zum Beispiel verhindert, dass der Benutzer versehentlich das in der Wechselhalterung angeordnete optische Element verstellt, was eine erneute Kalibrierung erforderlich machen würde.

Der erste Sensor und/oder der zweite Sensor können beispielsweise jeweils einer der folgenden Sensortypen sein: ein Taster, eine Lichtschranke, ein Hallsensor, ein induktiver Näherungsschalter und ein kapazitiver Näherungsschalter.

Bei einer weiteren Ausführungsform umfasst das abbildende System eine Ausgabeeinheit. Die Steuereinheit kann dazu ausgebildet sein, die Ausgabeeinheit anzusteuern, eine entsprechende Warnung auszugeben, wenn die Steuereinheit ermittelt hat, dass das Zugangselement geöffnet wurde. Die Ausgabeeinheit kann beispielsweise einen Bildschirm, ein Display, eine Warnlampe oder andere optische Ausgabeelemente umfassen. Die Ausgabeeinheit kann aber auch akustische Ausgabeelemente umfassen, beispielsweise einen Lautsprecher oder einen Summer. Über die Ausgabeeinheit kann die Steuereinheit den Benutzer informieren, dass das Zugangselement geöffnet wurde und somit ein Zugriff auf das in der Wechselhalterung aufgenommene optische Element möglich war. Die Steuereinheit kann den Benutzer auch darüber informieren, dass eine erneute Kalibrierung erforderlich ist, die beispielsweise manuell durch den Benutzer gestartet werden kann. Ferner kann die Steuereinheit dazu ausgebildet sein, die Ausgabeeinheit anzusteuern, eine entsprechende Warnung auszugeben, wenn die Steuereinheit ermittelt hat, dass das Zugangselement momentan in dem geöffneten Zustand ist.

Bei einer weiteren Ausführungsform ist die Steuereinheit dazu ausgebildet, einen Kalibriervorgang des abbildenden Systems zu starten, wenn die Steuereinheit ermittelt hat, dass das Zugangselement geöffnet wurde. Wurde das Zugangselement geöffnet, ist eine erneute Kalibrierung erforderlich. Bei dieser Ausführungsform wird das abbildende System proaktiv tätig und startet den für die erneute Kalibrierung erforderlichen Kalibriervorgang. Der Kalibriervorgang kann dabei automatisch durch die Steuereinheit gestartet werden. Die Steuereinheit kann auch dazu ausgebildet sein, den Kalibriervorgang des abbildenden Systems erst nach erfolgter Bestätigung des Benutzers zu starten. Die Bestätigung des Benutzers kann beispielsweise eine Benutzereingabe in eine Eingabeeinheit des abbildenden Systems sein. Dies informiert den Benutzer über den Umstand, dass eine erneute Kalibrierung erforderlich ist, lässt dem Benutzer aber die Wahl, ob er den Kalibriervorgang jetzt oder zu einem späteren Zeitpunkt ausführen möchte.

Bei einer weiteren Ausführungsform umfasst das Zugangselement eine Schublade oder eine Schwenklade. Die Schublade oder die Schwenklade können beispielsweise als Teil des Gehäuses des abbildenden Systems ausgebildet sein und ermöglichen einen einfachen und schnellen Zugriff auf die Wechselvorrichtung und das darin angeordnete optische Element.

Bei einer weiteren Ausführungsform umfassen die Schublade oder die Schwenklade die Wechselhalterung. Sind die Schublade oder die Schwenklade beispielsweise als Teil des Gehäuses des abbildenden Systems ausgebildet, kann bei dieser Ausführungsform die Wechselhalterung zumindest teilweise aus dem Gehäuse herausgeführt werden, um einen einfachen und schnellen Zugriff auf das darin angeordnete optische Element zu ermöglichen.

Bei einer weiteren Ausführungsform umfasst das Zugangselement eine Klappe des Gehäuses der abbildenden Vorrichtung. Bei dieser Ausführungsform ist die Wechselhalterung beispielsweise fest innerhalb des Gehäuses angeordnet. Durch Öffnen der Klappe wird die Wechselhalterung nicht bewegt, was das Risiko minimiert, dass das in der Wechselhalterung angeordnete optische Element verstellt wird und eine Nachjustierung erforderlich wird. Durch die Klappe kann ferner das Gehäuse verschlossen werden, so dass kein Streulicht in den optischen Strahlengang gelangen kann, in dem das optische Element angeordnet ist.

Bei einer weiteren Ausführungsform umfasst das bistabile Element einen mechanischen Mitläufer, der dazu ausgebildet ist, beim Öffnen des Zugangselements durch einen mechanischen Kontakt mit dem Zugangselement von einer ersten Stellung in eine zweite Stellung gebracht zu werden und beim Schließen des Zugangselements in der zweiten Stellung zu verbleiben, so dass der erste stabile Zustand der ersten Stellung des Mitläufers entspricht und der zweite stabile Zustand der zweiten Stellung des Mitläufers entspricht. Bei einer solchen Ausführungsform umfasst oder bildet das Zugangselement einen Mitläufer, so dass bei einer Bewegung des Zugangselements der Mitläufer des bistabilen Elements bewegt wird. Die Stellung des Mitläufers kann beispielsweise durch den ersten Sensor erfasst werden. Der Mitläufer kann beispielsweise linear gelagert sein oder eine drehbare Scheibe umfassen. Nach dem die Steuereinheit ermittelt hat, dass der Mitläufer in der zweiten Stellung ist, kann der Mitläufer in die erste Stellung zurückgebracht werden, beispielsweise motorisch oder manuell durch einen Benutzer. Der Mitläufer wird rein durch mechanischen Kontakt mit dem Zugangselement in die zweite Stellung gebracht. Damit ist es nicht erforderlich, das bistabile Element beispielsweise mit elektrischer Energie zu versorgen, um zu ermitteln, ob das Zugangselement geöffnet wurde. Anders als beispielsweise ein Taster oder ein anderer Sensor, kann das bistabile Element insbesondere auch dazu verwendet werden, zu ermitteln, ob das Zugangselement in einem ausgeschalteten Zustand des abbildenden Systems geöffnet wurde.

Bei einer weiteren Ausführungsform umfasst das bistabile Element einen bistabilen Hubmagneten. Der erste stabile Zustand kann einer ersten Stellung eines Ankers des Hubmagneten entsprechen. Der zweite stabile Zustand kann einer zweiten Stellung des Ankers des Hubmagneten entsprechen. Bei dieser Ausführungsform bildet der Anker des Hubmagneten den mechanischen Mitläufer. Die Stellung des Ankers kann ebenfalls beispielsweise durch den ersten Sensor erfasst werden. Die Steuereinheit kann dazu ausgebildet sein, den Hubmagneten derart anzusteuern, dass der Anker in die erste Stellung zurückgebracht wird. Der Anker kann auch unter Verwendung eines Motors oder manuell durch einen Benutzer in die erste Stellung zurückgebracht werden. Auch bei dieser Ausführungsform ist es nicht erforderlich, dass das abbildende System in einem eingeschalteten Zustand ist, um erfassen zu können, ob das Zugangselement geöffnet wurde.

Bei einer weiteren Ausführungsform ist die Steuereinheit dazu ausgebildet, das bistabile Element anzusteuern, um das bistabile Element in den ersten stabilen Zustand zurückzuversetzen.

Beispielsweise kann die Steuereinheit dazu ausgebildet sein, das bistabile Element nach Abschluss des Kalibriervorganges anzusteuern, um das bistabile Element in den ersten stabilen Zustand zurückzuversetzen. Um das bistabile Element in den ersten stabilen Zustand zurückzuversetzen, kann die Steuereinheit zum Beispiel einen Motor ansteuern, der den mechanischen Mitläufer des bistabilen Elements in die erste Stellung zurückversetzt. Die Steuereinheit kann auch dazu ausgebildet sein, den Hubmagneten derart anzusteuern, dass der Anker in die erste Stellung zurückgebracht wird. Durch automatisches Zurückversetzen des bistabilen Elements in den ersten Zustand entfällt die Notwendigkeit, das bistabile Element manuell zurückzusetzen, um ein erneutes Öffnen des Zugangselements detektieren zu können. Das abbildende System ist dadurch sehr benutzerfreundlich.

Bei einer weiteren Ausführungsform ist die Wechselhalterung dazu ausgebildet, zumindest eines der folgenden optischen Elemente aufzunehmen: ein Filter, einen Filterwürfel, ein Fluoreszenzfilter, einen Strahlteiler, eine Linse, ein Linsenelement und eine Aperturblende. Die vorgenannten optischen Elemente werden in verschiedenen Arten von abbildenden Systemen häufig verwendet. Das abbildende System ist somit vielseitig einsetzbar.

Die Erfindung betrifft ferner ein Mikroskop umfassend das oben beschriebene abbildende System mit der Wechselvorrichtung. Das Mikroskop hat dieselben Vorteile wie das abbildende System. Insbesondere kann das Mikroskop mit Merkmalen weitergebildet werden, die in diesem Dokument im Zusammenhang mit dem abbildenden System beschrieben sind. Ferner kann das oben beschriebene abbildende System mit Merkmalen weitergebildet werden, die in diesem Dokument im Zusammenhang mit dem Mikroskop beschrieben sind.

### Kurzbeschreibung der Figuren

Ausführungsbeispiele der Erfindung werden im Folgenden anhand der Figuren näher erläutert. Darin zeigen:
- Figur 1: ein abbildendes System mit einer Wechselvorrichtung gemäß einem Ausführungsbeispiel;
- Figuren 2a bis 2d: zeigen jeweils in schematischer Darstellung eine Wechselvorrichtung des abbildenden Systems gemäß einem weiteren Ausführungsbeispiel;
- Figuren 3a bis 3d: zeigen jeweils in schematischer Darstellung eine Wechselvorrichtung des abbildenden Systems gemäß einem weiteren Ausführungsbeispiel;
- Figuren 4a bis 4d: zeigen jeweils in schematischer Darstellung eine Wechselvorrichtung des abbildenden Systems gemäß einem weiteren Ausführungsbeispiel;
- Figur 5: zeigt ein Mikroskop gemäß einem Ausführungsbeispiel; und
- Figur 6: zeigt den Ablaufplan eines beispielhaften Verfahrens zum Betreiben des abbildenden Systems.

### Detaillierte Beschreibung

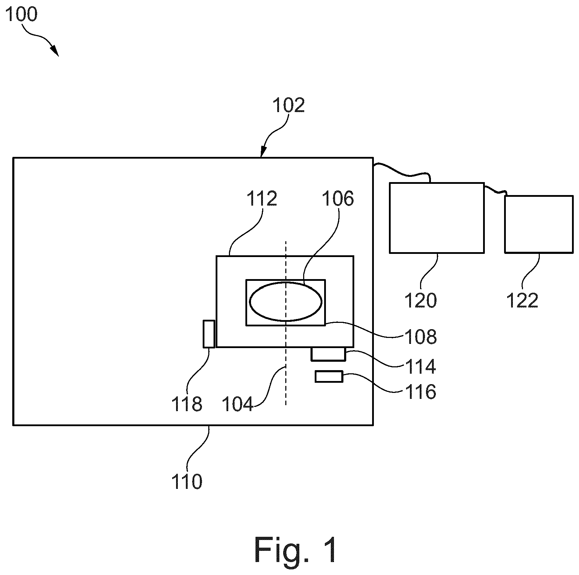

Figur 1 zeigt in schematischer Darstellung ein abbildendes System 100 mit einer Wechselvorrichtung 102 gemäß einem Ausführungsbeispiel. Das abbildende System 100 ist beispielsweise ein Teil eines Mikroskops, eines Objektträger-Scanners (auch Slidescanner genannt), eines Spektrometers oder eines anderen optischen Geräts und umfasst zumindest einen optischen Strahlengang 104.

Das abbildende System 100 hat eine Wechselvorrichtung 102, die derart ausgebildet ist, dass mindestens ein auswechselbares optisches Element 106 in den optischen Strahlengang 104 einbringbar ist. Bei dem auswechselbaren optischen Element 106 kann es sich beispielsweise um ein Filter, einen Filterwürfel, einen Strahlteiler, eine Linse, ein Linsenelement, eine Aperturblende oder ein ähnliches optisches Element handeln. In Figur 1 ist das optische Element 106 rein beispielhaft als eine Linse dargestellt. Die Wechselvorrichtung 102 umfasst eine Wechselhalterung 108, in der das optische Element 106 anordenbar ist. Wenn das optische Element 106 in der Wechselhalterung 108 aufgenommen ist, kann das optische Element 106 in den optischen Strahlengang 104 des abbildenden Systems 100 eingebracht werden, wie dies in Figur 1 gezeigt ist.

Bei der gezeigten Ausführungsform ist der optische Strahlengang 104 innerhalb eines Gehäuses 110 des abbildenden Systems 100 angeordnet. Um einen Zugriff auf die Wechselhalterung 108 und damit auf das optische Element 106 zu ermöglichen, umfasst die Wechselvorrichtung 102 ein Zugangselement. Das Zugangselement hat einen geöffneten Zustand, in dem ein Zugriff auf die Wechselhalterung 108 und das darin angeordnete optische Element 106 möglich ist. Wenn das Zugangselement geöffnet ist, kann beispielsweise das optische Element 106 aus der Wechselhalterung 108 entfernt oder gegen ein anderes optisches Element 106 getauscht werden. Das Zugangselement 112 hat ferner einen geschlossenen Zustand, in dem kein Zugriff auf die Wechselhalterung 108 und das darin angeordnete optische Element 106 möglich ist. Beispielsweise kann das Zugangselement 112 geschlossen werden, um einen sicheren Betrieb des abbildenden Systems 100 zu gewährleisten.

Die Wechselvorrichtung 102 umfasst zudem ein bistabiles Element 114, das einen ersten stabilen Zustand und einen zweiten stabilen Zustand hat. Befindet sich das bistabile Element 114 in dem ersten stabilen Zustand, kann es nur durch eine äußere Krafteinwirkung in den zweiten stabilen Zustand übergehen. Umgekehrt kann das bistabile Element 114 nur durch eine äußere Krafteinwirkung in den ersten stabilen Zustand zurückversetzt werden. In der Wechselvorrichtung 102 ist das bistabile Element 114 derart angeordnet und dazu ausgebildet, durch ein Öffnen des Zugangselements 112 von dem ersten stabilen Zustand in den zweiten stabilen Zustand gebracht zu werden, beispielsweise durch mechanischen Kontakt mit dem Zugangselement 112. Das bistabile Element 114 ist ferner dazu ausgebildet, beim Schließen des Zugangselements 112 in dem zweiten stabilen Zustand zu verbleiben.

Die Wechselvorrichtung 102 umfasst ferner einen ersten Sensor 116, der in Figur 1 an dem bistabilen Element angeordnet ist, und einen zweiten Sensor 118, der in Figur 1 links des Zugangselements 112 angeordnet ist. Der erste Sensor 116 ist dazu ausgebildet, zu ermitteln, in welchem Zustand sich das bistabile Element 114 befindet, d.h. ob sich das bistabile Element 114 in dem ersten stabilen Zustand oder in dem zweiten stabilen Zustand befindet. Das Ergebnis dieser Ermittlung kann durch den ersten Sensor 116 beispielsweise in Form von ersten Sensordaten bereitgestellt werden. Der zweite Sensor 118 ist dazu ausgebildet, zu ermitteln, in welchem Zustand sich das Zugangselement 112 befindet, d.h. ob das Zugangselement 112 momentan geöffnet oder geschlossen ist. Das Ergebnis dieser Ermittlung kann durch den zweiten Sensor 118 beispielsweise in Form von zweiten Sensordaten bereitgestellt werden.

Eine Steuereinheit 120 des abbildenden Systems 100 ist dazu ausgebildet, zu ermitteln, ob das Zugangselement 112 geöffnet wurde und damit ein Zugriff auf das in der Wechselhalterung 108 angeordnete optische Element 106 möglich war. Hierzu ermittelt die Steuereinheit 120 zunächst, ob sich das bistabile Element 114 in dem ersten stabilen Zustand oder in dem zweiten stabilen Zustand befindet. Dazu verarbeitet die Steuereinheit 120 beispielsweise die ersten Sensordaten. Wenn die Steuereinheit 120 ermittelt hat, dass sich das bistabile Element 114 in dem zweiten stabilen Zustand befindet, dann ermittelt die Steuereinheit 120, dass das Zugangselement 112 geöffnet wurde. Diese Ermittlung kann zu verschiedenen Zeitpunkten während des Betriebs des abbildenden Systems 100 erfolgen. Bei einem Ausführungsbeispiel ermittelt die Steuereinheit 120 beim Einschalten des abbildenden Systems 100, in welchem Zustand sich das bistabile Element 114 befindet. Ermittelt die Steuereinheit 120, dass sich das bistabile Element 114 beim Einschalten in dem zweiten stabilen Zustand befindet, dann ermittelt die Steuereinheit 120, dass das Zugangselement 112 im ausgeschalteten Zustand geöffnet worden ist. Dies bedeutet, dass ein Zugriff auf das optische Element 106 möglich war, während das abbildende System 100 ausgeschaltet war.

Wenn die Steuereinheit 120 ermittelt hat, dass das Zugangselement 112 geöffnet wurde, kann die Steuereinheit 120 eine Reihe von Maßnahmen ergreifen. Da in diesem Fall ein Zugriff auf das in der Wechselhalterung 108 angeordnete optische Element 106 möglich war, besteht die Möglichkeit, dass das optische Element 106 verstellt oder entfernt wurde und damit eine zuvor durchgeführte Kalibrierung des abbildenden Systems 100 erneut durchgeführt werden muss. Bei einem Ausführungsbeispiel startet die Steuereinheit 120 die erneute Kalibrierung automatisch, wenn die Steuereinheit 120 ermittelt hat, dass ein Zugriff auf das in der Wechselhalterung 108 angeordnete optische Element 106 möglich war. Bei einer weiteren Ausführungsform startet die Steuereinheit 120 die erneute Kalibrierung erst nach Bestätigung durch einen Benutzer. Nach erfolgter Kalibrierung kann die Steuereinheit 120 das bistabile Element 114 ansteuern, um das bistabile Element 114 wieder in den ersten Zustand zurückzuversetzen.

Das in Figur 1 gezeigte Ausführungsbeispiel des abbildenden Systems 100 umfasst ferner eine Ausgabeeinheit 122, beispielsweise ein Display. Die Ausgabeeinheit 122 ist ansteuerbar, um beispielsweise Informationen oder Warnungen an den Benutzer auszugeben. Bei einem Ausführungsbeispiel ist die Steuereinheit 120 dazu ausgebildet, die Ausgabeeinheit 122 anzusteuern, eine Warnung auszugeben. Beispielsweise kann die Steuereinheit 120 den Benutzer warnen, dass das Zugangselement 112 im ausgeschalteten Zustand geöffnet worden ist oder dass das Zugangselement 112 momentan geöffnet ist. Die Steuereinheit 120 kann ferner den Benutzer informieren, dass das bistabile Element 114 wieder in den ersten Zustand zurückversetzt werden muss.

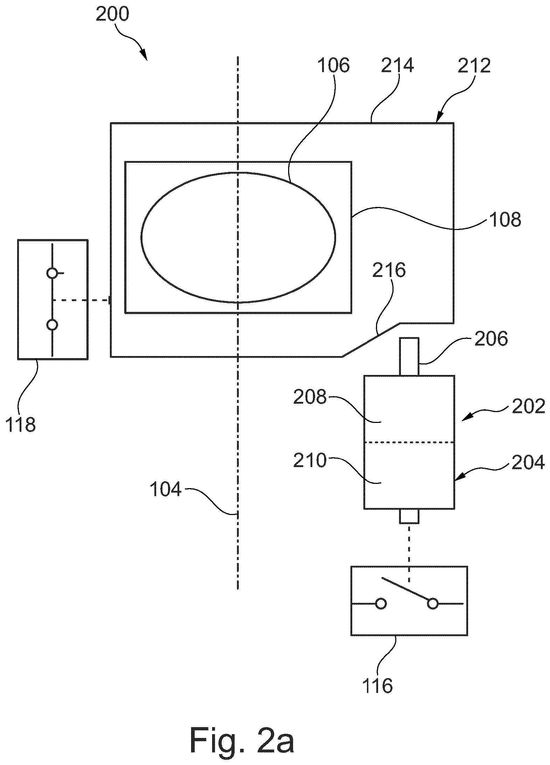

Figuren 2a bis 2d zeigen jeweils in schematischer Darstellung die Wechselvorrichtung 200 des abbildenden Systems 100 gemäß einem weiteren Ausführungsbeispiel. Bei dem in den Figuren 2a bis 2d gezeigten Ausführungsbeispiel umfasst das bistabile Element 202 einen Hubmagneten 204.

Der Hubmagnet 204 umfasst einen Anker 206, der linear gelagert und von zwei Spulen 208, 210 umgeben ist. Durch Anlegen einer Spannung an eine erste Spule 208 kann der Anker 206 in eine erste Position verbracht werden. Wird die Spannung nicht mehr angelegt, verbleibt der Anker 206 dann in der ersten Position. Durch Anlegen einer Spannung an eine zweite Spule 210 kann der Anker 206 in eine zweite Position verbracht werden. Wird keine Spannung mehr an die zweite Spule 210 angelegt, verbleibt der Anker 206 in der zweiten Position. Die erste Position des Ankers 206 entspricht somit dem ersten stabilen Zustand und die zweite Position des Ankers 206 entspricht dem zweiten stabilen Zustand. Die Position des Ankers 206 wird durch den ersten Sensor 116 erfasst. In Figur 2a ist der Anker 206 in der ersten Position, d.h. das bistabile Element 202 befindet sich in dem ersten Zustand. Dies stellt die Ausgangsposition dar.

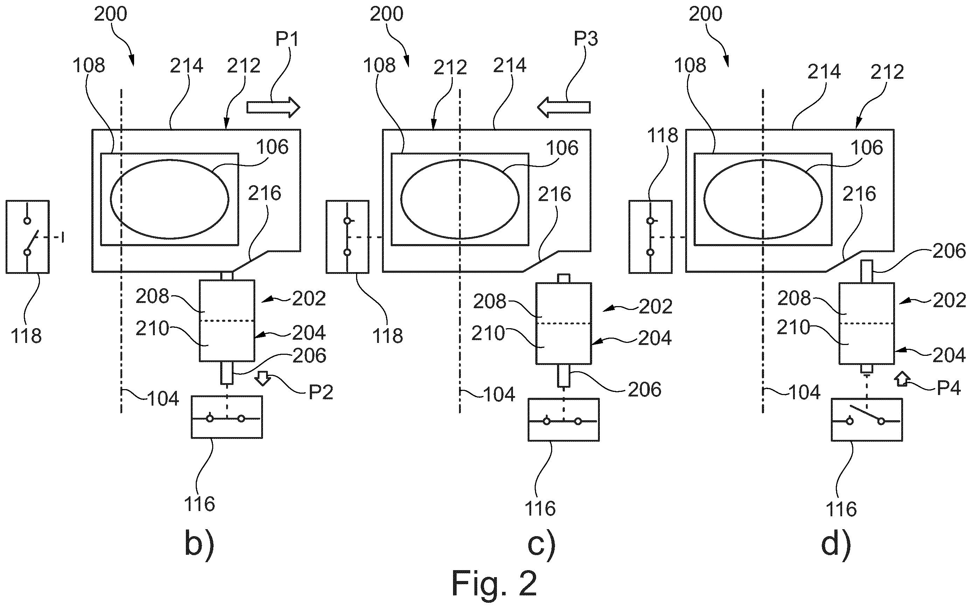

Bei dem in den Figuren 2a bis 2d gezeigten Ausführungsbeispiel umfasst das Zugangselement 212 eine Schublade 214, welche die Wechselhalterung 108 umfasst. Die Schublade 214 weist ferner einen Mitnehmer 216 auf, der als eine Rampe ausgebildet ist. Beim Öffnen der Schublade 214 stößt der Mitnehmer 216 an den Anker 206 und führt den Anker 206 durch mechanischen Kontakt in die zweite Position über. Der Anker 206 bildet somit einen mechanischen Mitläufer. Die Situation beim Öffnen der Schublade 214 ist in Figur 2b gezeigt, in der ein erster Pfeil P1 die Bewegungsrichtung der Schublade 214 beim Öffnen anzeigt. Ein zweiter Pfeil P2 in Figur 2b zeigt die Bewegungsrichtung des Ankers 206 beim Öffnen der Schublade 214 an. Dass die Schublade 214 geöffnet ist, wird durch den zweiten Sensor 118 registriert.

Der Mitnehmer 216 der Schublade 214 ist ferner so ausgebildet, dass der Anker 206 beim Schließen der Schublade 214 in der zweiten Stellung verbleibt. Die Situation beim Schließen der Schublade 214 ist in Figur 2c gezeigt, in der ein Pfeil P3 die Bewegungsrichtung der Schublade 214 beim Schließen anzeigt. Befindet sich der Anker 206 in der zweiten Stellung, kann somit davon ausgegangen werden, dass die Schublade 214 geöffnet worden ist und ein Zugriff auf das in der Wechselhalterung 108 angeordnete optische Element 106 möglich war. Um den Anker 206 wieder in die erste Position zurückzubringen, kann der Hubmagnet 204 angesteuert werden, um die erste Spule 208 mit Strom zu versorgen. Das Zurückführen des Ankers 206 ist in Figur 2d gezeigt, in der ein Pfeil P4 die Bewegungsrichtung des Ankers 206 beim Zurückführen in die erste Position anzeigt.

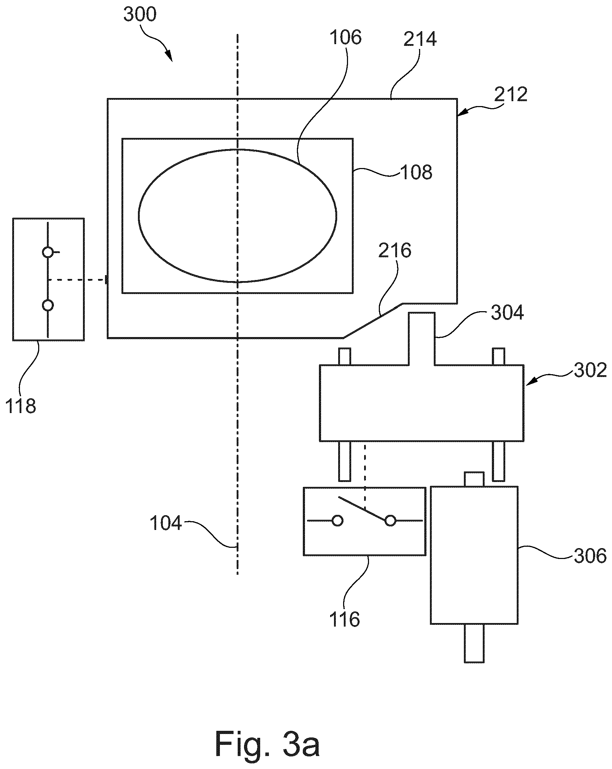

Figuren 3a bis 3d zeigen jeweils in schematischer Darstellung die Wechselvorrichtung 300 des abbildenden Systems 100 gemäß einem weiteren Ausführungsbeispiel. Bei dem in den Figuren 3a bis 3d gezeigten Ausführungsbeispiel umfasst das bistabile Element 302 einen linear gelagerten Mitläufer 304.

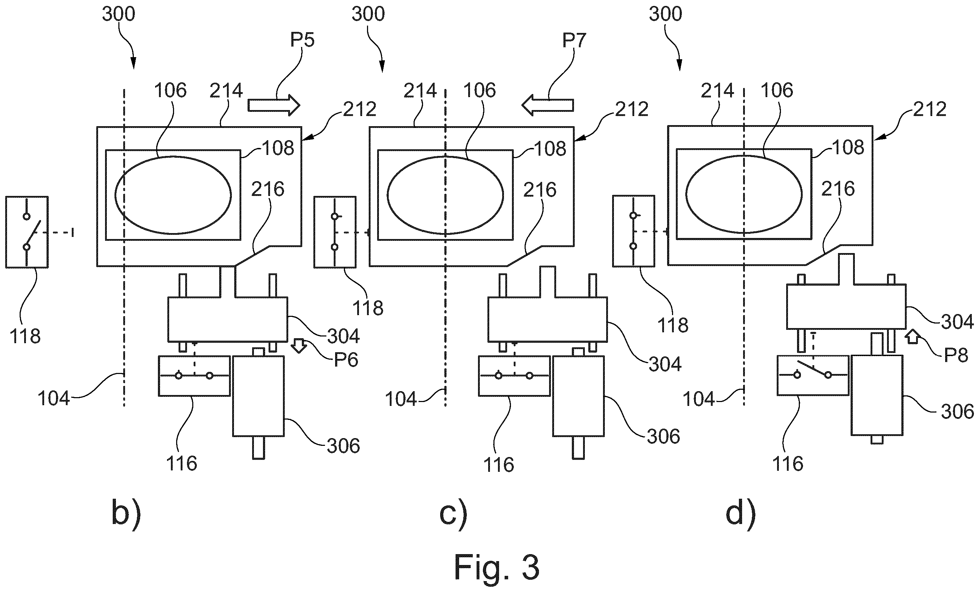

Der linear gelagerte Mitläufer 304 entspricht in seiner Funktion dem Anker 206 des Hubmagneten 204. In Figur 3a befindet sich der linear gelagerte Mitläufer 304 in einer ersten Position, die dem ersten stabilen Zustand des bistabilen Elements 302 entspricht. Figur 3a zeigt somit die Ausgangsposition. Beim Öffnen der Schublade 214 kommt der Mitnehmer 216 der Schublade 214 mit dem linear gelagerten Mitläufer 304 in Kontakt und führt diesen in eine zweite Position über. Die Situation beim Öffnen der Schublade 214 ist in Figur 3b gezeigt, in der ein erster Pfeil P5 die Bewegungsrichtung der Schublade 214 beim Öffnen anzeigt. Ein zweiter Pfeil P6 in Figur 3b zeigt die Bewegungsrichtung des linear gelagerten Mitläufers 304 beim Öffnen der Schublade 214 an. Beim Schließen der Schublade 214 verbleibt der linear gelagerte Mitläufer 304 in der zweiten Stellung, die somit dem zweiten stabilen Zustand entspricht. Die Situation beim Schließen der Schublade 214 ist in Figur 3c gezeigt, in der ein Pfeil P7 die Bewegungsrichtung der Schublade 214 beim Schließen anzeigt.

Die Wechselvorrichtung 300 umfasst ferner einen Linearmotor 306, der dazu ausgebildet ist, den linear gelagerten Mitläufer 304 wieder in die erste Position zurückzubringen. Das Zurückbringen des linear gelagerten Mitläufer 304 ist in Figur 3d gezeigt, in der ein Pfeil P8 die Bewegungsrichtung des linear gelagerten Mitläufers 304 beim Zurückführen in die erste Position anzeigt.

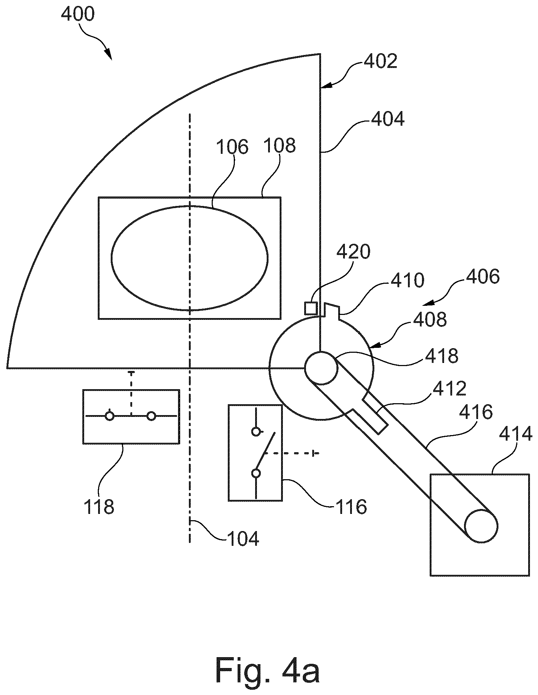

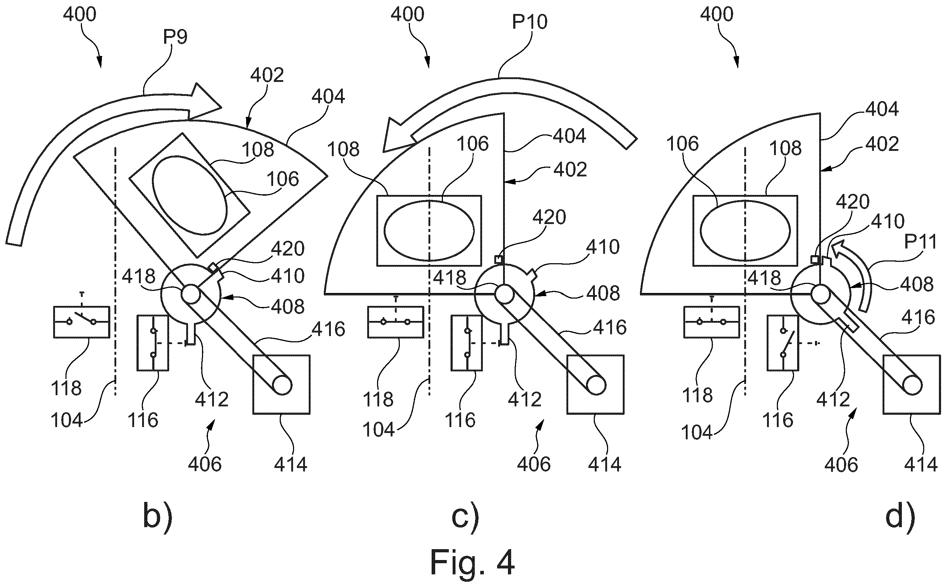

Figuren 4a bis 4d zeigen jeweils in schematischer Darstellung die Wechselvorrichtung 400 des abbildenden Systems 100 gemäß einem weiteren Ausführungsbeispiel. Bei dem in den Figuren 4a bis 4d gezeigten Ausführungsbeispiel umfasst das Zugangselement 402 eine Schwenklade 404, welche die Wechselhalterung 108 umfasst.

Das bistabile Element 406 umfasst in dem in den Figuren 4a bis 4d gezeigten Ausführungsbeispiel eine Scheibe 408, an der zwei Nocken 410, 412 ausgebildet sind. Die Wechselvorrichtung 400 umfasst ferner einen Drehmotor 414, der rein beispielhaft über einen Riemen 416 mit einer Achse 418 der Scheibe 408 verbunden ist. Ein erster Nocken 410 der Scheibe 408 befindet sich in Figur 4a in einer ersten Position, die dem ersten stabilen Zustand entspricht. Ein Mitnehmer 420 der Schwenklade 404 stößt beim Öffnen der Schwenklade 404 an den ersten Nocken 410 der Scheibe 408. Der erste Nocken 410 entspricht damit in seiner Funktion dem Anker 206 des Hubmagneten 204 und dem linear gelagerten Mitläufer 304. Die Kraft, die von dem Mitnehmer 420 auf die Scheibe 408 ausgeübt wird, ist dabei größer als die Reibung zwischen dem Riemen 416 und der Achse 418 der Scheibe 408. Der erste Nocken 410 wird somit aus der ersten Position herausgedreht. Das Öffnen der Schwenklade 404 ist in Figur 2b gezeigt, in der ein Pfeil P9 die Drehrichtung der Schwenklade 404 und der Scheibe 408 beim Öffnen anzeigt. Ist die Schwenklade 404 geöffnet, befindet sich der erste Nocken 410 in einer zweiten Position. Befindet sich der erste Nocken 410 in der zweiten Position, ist die Scheibe 408 derart gedreht, dass ein zweiter Nocken 412 an den ersten Sensor 116 stößt Hierdurch detektiert der zweite Sensor 118, dass sich der erste Nocken 410 in der zweiten Position befindet. Beim Schließen der Schwenklade 404 verbleibt die Scheibe 408 in ihrer Position, d.h. der erste Nocken 410 verbleibt in der zweiten Stellung, die somit dem zweiten stabilen Zustand entspricht. Die Situation beim Schließen der Schublade 214 ist in Figur 4c gezeigt, in der ein Pfeil P10 die Bewegungsrichtung der Schwenklade 404 beim Schließen anzeigt. Mit Hilfe des Drehmotors 414 kann die Scheibe 408 dann zurückgedreht werden, um den ersten Nocken 410 in die erste Position zurückzubringen. Das Zurückdrehen der Scheibe 408 ist in Figur 4d gezeigt, in der ein Pfeil P11 die Bewegungsrichtung der Scheibe 408 beim Zurückdrehen anzeigt.

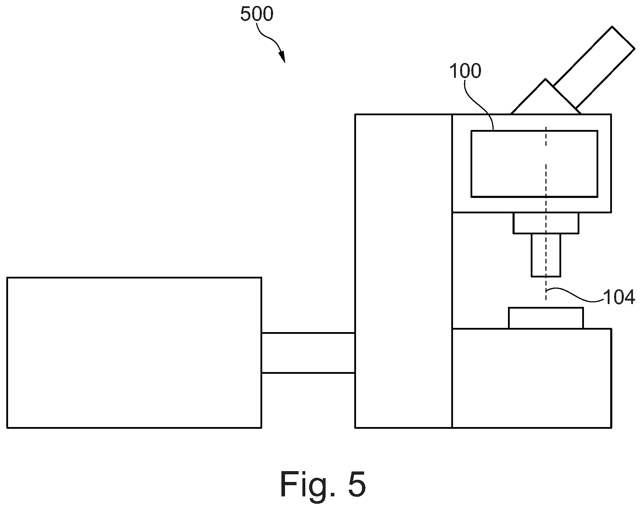

Figur 5 zeigt ein Mikroskop 500 gemäß einem Ausführungsbeispiel. Das Mikroskop 500 umfasst das abbildende System 100, das rein schematisch als ein Kasten dargestellt ist. Der optische Strahlengang 104 ist dabei ein Strahlengang des Mikroskops 500.

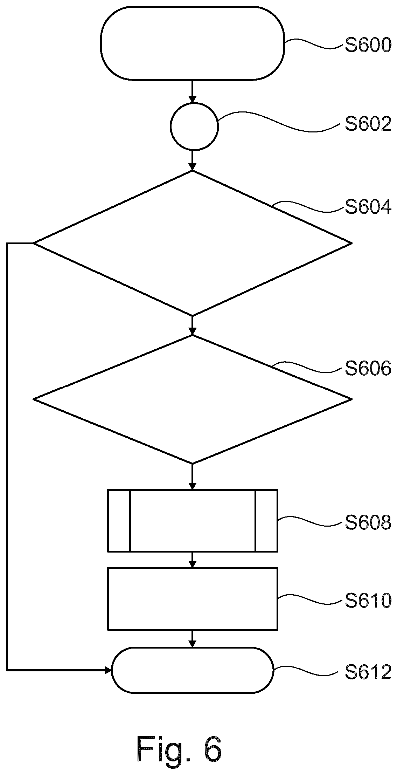

Figur 6 zeigt den Ablaufplan eines beispielhaften Verfahrens zum Betreiben des abbildenden Systems 100.

Das Verfahren wird in Schritt S600 gestartet. In Schritt S602 wird das abbildende System 100 eingeschaltet, beispielsweise durch den Benutzer. In Schritt S604 wird ermittelt, ob das Zugangselement 112, 212, 402 geöffnet wurde, während das abbildende System 100 ausgeschaltet war. Bei einer Ausführungsform ermittelt die Steuereinheit 120 auf Grundlage der ersten Sensordaten den Zustand des bistabilen Elements 114, 202, 302, 406. Wenn das bistabile Element 114, 202, 302, 406 in dem zweiten Zustand ist, ermittelt die Steuereinheit 120, dass das Zugangselement 112, 212, 402 geöffnet wurde und das Verfahren wird in Schritt S606 fortgeführt. Wenn das bistabile Element 114, 202, 302, 406 in dem ersten Zustand ist, ermittelt die Steuereinheit 120, dass das Zugangselement 112, 212, 402 nicht geöffnet wurde und das Verfahren wird in Schritt S612 beendet. In Schritt S606 wird ermittelt, ob das Zugangselement 112, 212, 402 momentan geöffnet ist. Bei einer Ausführungsform ermittelt die Steuereinheit 120 auf Grundlage der zweiten Sensordaten, ob das Zugangselement 112, 212, 402 momentan geöffnet ist. Wenn das Zugangselement 112, 212, 402 momentan geöffnet ist, kann eine entsprechende Warnung an den Benutzer ausgegeben werden. Bei einer Ausführungsform steuert die Steuereinheit 120 die Ausgabeeinheit 122 zum Ausgeben der Warnung an. Die Warnung kann auch mit einer Aufforderung an den Benutzer verbunden sein, das Zugangselement 112, 212, 402 zu schließen. Das Verfahren wird dann in Schritt S608 fortgesetzt, wenn das Zugangselement 112, 212, 402 geschlossen wurde.

In Schritt S608 wird eine Kalibrierung des abbildenden Systems 100 durchgeführt. Hierdurch wird sichergestellt, dass das abbildende System 100 korrekt eingestellt ist, auch wenn das optische Element 106 seit der letzten Kalibrierung verschoben, verstellt oder gewechselt wurde. Bei einer Ausführungsform initiiert die Steuereinheit 120 einen Kalibriervorgang, um die Kalibrierung des abbildenden Systems 100 zu starten. In Schritt S610 wird nach erfolgter Kalibrierung das bistabile Element 114, 202, 302, 406 wieder in den ersten stabilen Zustand zurückgeführt. Dies kann manuell durch den Benutzer erfolgen, der dazu durch eine entsprechende Ausgabe aufgefordert wurde. Dies kann aber auch automatisch erfolgen, in dem beispielsweise die Steuereinheit 120 das bistabile Element 114, 202, 302, 406 entsprechend ansteuert. Das Verfahren wird dann in Schritt S612 beendet, wenn sich das bistabile Element 114, 202, 302, 406 wieder in dem ersten stabilen Zustand befindet.

Der Begriff "und/oder" umfasst alle Kombinationen von einem oder mehreren der zugehörigen aufgeführten Elemente und kann mit "/" abgekürzt werden.

Obwohl einige Aspekte im Rahmen einer Vorrichtung beschrieben wurden, ist es klar, dass diese Aspekte auch eine Beschreibung des entsprechenden Verfahrens darstellen, wobei ein Block oder eine Vorrichtung einem Verfahrensschritt oder einer Funktion eines Verfahrensschritts entspricht. Analog dazu stellen Aspekte, die im Rahmen eines Verfahrensschritts beschrieben werden, auch eine Beschreibung eines entsprechenden Blocks oder Elements oder einer Eigenschaft einer entsprechenden Vorrichtung dar.

### Bezugszeichenliste

- 100: Abbildendes System
- 102: Wechselvorrichtung
- 104: Strahlengang
- 106: Optisches Element
- 108: Wechselhalterung
- 110: Gehäuse
- 112: Zugangselement
- 114: Bistabiles Element
- 116, 118: Sensor
- 120: Steuereinheit
- 122: Ausgabeeinheit
- 200: Wechselvorrichtung
- 202: Bistabiles Element
- 204: Hubmagnet
- 206: Anker
- 208, 210: Spule
- 212: Zugangselement
- 214: Schublade
- 216: Mitnehmer
- 300: Wechselvorrichtung
- 302: Bistabiles Element
- 304: Mitläufer
- 306: Linearmotor
- 400: Wechselvorrichtung
- 402: Zugangselement
- 404: Schwenklade
- 406: Bistabiles Element
- 408: Scheibe
- 410, 412: Nocken
- 414: Drehmotor
- 416: Riemen
- 418: Achse
- 420: Mitnehmer
- P1-P11: Pfeil

## Patentansprüche

1. Ein abbildendes System (100) mit einer Wechselvorrichtung (102, 200, 300, 400), wobei die Wechselvorrichtung (102, 200, 300, 400) umfasst
eine Wechselhalterung (108), die dazu ausgebildet ist, mindestens ein optisches Element (106) aufzunehmen und dadurch in einem optischen Strahlengang (104) des abbildenden Systems (100) anzuordnen,
ein Zugangselement (112, 212, 402), das einen geöffneten und einen geschlossenen Zustand aufweist und dazu ausgebildet ist, in dem geöffneten Zustand einen Zugriff auf das in der Wechselhalterung (108) aufgenommene optische Element (106) zu ermöglichen, und
ein bistabiles Element (114, 202, 302, 406), das einen ersten stabilen Zustand und einen zweiten stabilen Zustand hat und dazu ausgebildet ist, beim Öffnen des Zugangselements (112, 212, 402) von dem ersten stabilen Zustand in den zweiten stabilen Zustand überzugehen und beim Schließen des Zugangselements (112, 212, 402) in dem zweiten stabilen Zustand zu verbleiben; und
wobei das abbildende System (100) ferner eine Steuereinheit (120) umfasst, die dazu ausgebildet ist, zu ermitteln, ob das bistabile Element (114, 202, 302, 406) in dem ersten stabilen Zustand oder dem zweiten stabilen Zustand ist, und zu ermitteln, dass das Zugangselement (112, 212, 402) geöffnet wurde und damit ein Zugriff auf das in der Wechselhalterung (108) aufgenommene optische Element (106) ermöglicht wurde, wenn das bistabile Element (114, 202, 302, 406) in dem zweiten stabilen Zustand ist.

2. Das abbildende System (100) nach Anspruch 1, wobei die Steuereinheit (120) dazu ausgebildet ist, beim Einschalten des abbildenden Systems (100) zu ermitteln, ob das bistabile Element (114, 202, 302, 406) in dem ersten stabilen Zustand oder dem zweiten stabilen Zustand ist, und zu ermitteln, dass in einem ausgeschalteten Zustand des abbildenden Systems (100) das Zugangselement (112, 212, 402) geöffnet wurde und damit ein Zugriff auf das in der Wechselhalterung (108) aufgenommene optische Element (106) ermöglicht wurde, wenn das bistabile Element (114, 202, 302, 406) in dem zweiten stabilen Zustand ist.

3. Das abbildende System (100) nach Anspruch 1 oder 2, wobei die Wechselvorrichtung (102, 200, 300, 400) einen ersten Sensor (116) umfasst, der dazu ausgebildet ist, zu ermitteln, ob sich das bistabile Element (114, 202, 302, 406) in dem ersten stabilen Zustand oder in dem zweiten stabilen Zustand befindet.

4. Das abbildende System (100) nach einem der vorhergehenden Ansprüche, wobei die Wechselvorrichtung (102, 200, 300, 400) einen zweiten Sensor (118) umfasst, der dazu ausgebildet ist, zu ermitteln, ob sich das Zugangselement (112, 212, 402) in dem geöffneten Zustand oder in dem geschlossenen Zustand befindet.

5. Das abbildende System (100) nach einem der vorhergehenden Ansprüche, umfassend eine Ausgabeeinheit (122), wobei die Steuereinheit (120) dazu ausgebildet ist, die Ausgabeeinheit (122) anzusteuern, eine entsprechende Warnung auszugeben, wenn die Steuereinheit (120) ermittelt hat, dass das Zugangselement (112, 212, 402) geöffnet wurde.

6. Das abbildende System (100) nach einem der vorhergehenden Ansprüche, wobei die Steuereinheit (120) dazu ausgebildet ist, einen Kalibriervorgang des abbildenden Systems (100) zu starten, wenn die Steuereinheit (120) ermittelt hat, dass das Zugangselement (112, 212, 402) geöffnet wurde.

7. Das abbildende System (100) nach einem der vorhergehenden Ansprüche, wobei das Zugangselement (212, 402) eine Schublade (214) oder eine Schwenklade (404) umfasst.

8. Das abbildende System (100) nach Anspruch 7, wobei die Schublade (214) oder die Schwenklade (404) die Wechselhalterung (108) umfassen.

9. Das abbildende System (100) nach einem der vorhergehenden Ansprüche, wobei das Zugangselement (112, 212, 402) eine Klappe eines Gehäuses (110) der abbildenden Vorrichtung umfasst.

10. Das abbildende System (100) nach einem der vorhergehenden Ansprüche, wobei das bistabile Element (202, 302, 406) einen mechanischen Mitläufer (206, 304, 410) umfasst, der dazu ausgebildet ist, beim Öffnen des Zugangselements (212, 402) durch einen mechanischen Kontakt mit dem Zugangselement (212, 402) von einer ersten Stellung in eine zweite Stellung gebracht zu werden und beim Schließen des Zugangselements (212, 402) in der zweiten Stellung zu verbleiben, so dass der erste stabile Zustand der ersten Stellung des mechanischen Mitläufers (206, 304, 410) entspricht und der zweite stabile Zustand der zweiten Stellung des mechanischen Mitläufers (206, 304, 410) entspricht.

11. Das abbildende System (100) nach einem der vorhergehenden Ansprüche, wobei das bistabile Element (202) einen Hubmagnet (204) umfasst, der erste stabile Zustand einer ersten Stellung eines Ankers (206) des Hubmagneten (204) entspricht und der zweite stabile Zustand einer zweiten Stellung des Ankers (206) des Hubmagneten (204) entspricht.

12. Das abbildende System (100) nach einem der vorhergehenden Ansprüche, wobei die Steuereinheit (120) dazu ausgebildet ist, das bistabile Element (114, 202, 302, 406) anzusteuern, um das bistabile Element (114, 202, 302, 406) in den ersten stabilen Zustand zurückzuversetzen.

13. Das abbildende System (100) nach einem der vorhergehenden Ansprüche, wobei die Wechselhalterung (108) dazu ausgebildet ist, zumindest eines der folgenden optischen Elemente aufzunehmen: ein Filter, einen Filterwürfel, ein Fluoreszenzfilter, einen Strahlteiler, eine Linse, ein Linsenelement und eine Aperturblende.

14. Ein Mikroskop (500) mit dem abbildenden System (100) nach einem der vorhergehenden Ansprüche.
